# EUROPÄISCHE PATENTANMELDUNG

(11) **EP 0 738 476 A1**
(43) Veröffentlichungstag der Anmeldung: **23.10.1996**
(21) Anmeldenummer: 96105994.6
(22) Anmeldetag: 17.04.1996
(51) Int. Cl.: A23L 3/04

(54) **Verfahren zur Behandlung von Produkten zwecks Haltbarmachens**

(30) Priorität: 18.04.1995 CH 1109/95
(71) Anmelder: Hoegger, Cornel, CH-9230 Flawil (CH)
(72) Erfinder: Hoegger, Cornel, CH-9230 Flawil (CH)
(74) Vertreter: White, William

(57) **Zusammenfassung**

Mit der Erfindung soll ermöglicht werden auf kleinstem Raum eine abgeschlossene Behandlung für Pasteurisierung von auf Lagerbehältern (40) befindlichen Nahrungsmitteln in einem einzigen Gehäuse (1) durchzuführen. Hohe und tiefe Temperaturen, wie sie bei der Erhitzung und nachfolgender Abkühlung auftreten, müssen von der Anordnung ertragen werden. Dabei sollen die Behandlungen mit mehrfachem Medieneinfluss, wie Dampf, Wasser, Stickstoff usw., mit absoluter Betriebssicherheit durchführbar sein. Dazu sind die Behandlungsräume (10,20,30) voneinander wärmeisoliert übereiander angeordnet und mit Durchgängen zwischen benachbarten Behandlungsräumen versehen. Zur lagestabilen Führung der Lagerbehälter (40) sind horizontale Schienen (11,21,31), die zur Führung von Rädern oder Gleitern (42) vorhanden. Zu deren Parallelführung beim Übergang von einem Bahandlungsraum zum andern sind die Führungsräder oder Gleiter (42) oder deren Tragbolzen durch eine zweite, auf diesem Abschnitt synchron mit der Antriebskette (43) umlaufenden Führungskette, mit entsprechenden Führungstaschen oder Bolzen zum Eingriff in die Führungsräder (42) bezw. mit den Führungsbolzen, geführt.

## Beschreibung

Die vorliegende Erfindung betrifft gemäss dem Oberbegriff im Anspruch 1 ein Verfahren zur Behandlung von Produkten zwecks Haltbarmachens, welche Produkte sich auf sich einander folgenden Lagerbehältern befinden und durch diese Lagerbehälter in parallelen Ebenen mit horizontalen Verschiebewegen und vertikalen Hebeanordnungen zwischen benachbarten Ebenen und wenigstens einer Rückführung zwischen unterster und oberster Ebene, oder umgekehrt, lagestabil fortbewegbar sind.

Die Erfindung betrifft ausserdem eine Anordnung zur Durchführung des Verfahrens gemäss dem Oberbegriff des Anspruchs 6.

Anordnungen zur Wärmebehandlungen sind bekannt. Zum Beispiel zeigt die US 3,243,032 eine mehrschichtige Transportanordnung. Zwei parallele Transportketten besitzen in durch Lagerbehälter bestimmten Abständen halbzylindrische hohle Stift in denen Zapfen von den Transportbehältern ruhen und die dadurch mitgenommen werden. An den Umlenkstellen von einer Ebene in die benachbarte Ebene befinden sich Paare von Transportzahnrädern. Der Antrieb derselben erfolgt durch die Transportkette und zwar wird das eine von der Kette der unteren und der oberen Kette angetrieben, während das zugeornete Rad infolge eines Anschnittes nur zeitweilig in Eingriff steht. Der Anschnitt ist so angeordnet, dass der erste Transportzapfen nicht in Eingriff kommen kann, jedoch der zugehörige nachfolgende Transportzapfen. Nachteilig an einer solchen Anordnung ist, dass die Transportbehälter an der Kette aufgehängt sind, so dass die Transportkette gespannt werden muss, wobei die Gefahr besteht, dass Transportbehälter in benachbarten Ebenen infolge unachtsamer Beladung kollidieren können und dadurch die Kette verspannt werden könnte. was sich dann nicht ohne weiteres durch Nachspannen ausgleichen lässt.

In der JP-A-58 047 711 gemäss Patent Abstract of Japan, Band 007, No 128 (M-220) soll dieser Nachteil behoben werden, indem die Transportbehälter mit Rollen versehen sind, mit denen sie auf einer Rollschiene laufen. Die Antriebskette ist als Rollenkette mit lose auf Hülsen drehbaren Rollen ausgebildet, welche Rollen auf einer zweiten, ausserhalb der Transportschiene angeordneten Kettenschiene aufliegen und so die Kette tragen. Es ist bekannt, dass solche Rollenketten schwer und teuer sind, und dass nicht gewährleistet ist, dass zwischen der Kette und der Schiene eine Rollreibung besteht, weil bei Temperaturunterschieden, wie sie z.B. in Wärmeprozessen vorkommen, die Rollen auf den Achsen festsitzen, so dass eine Gleitreibung mit höherem Kraftverbrauch stattfindet. Wenn dies einmal vorkommt, so werden die Rollen der Kette angeschliffen und werden deshalb gleiten und nicht mehr rollen. Zudem führen die doppelten Schienen beidseits der Lagerbehälter ausser einem zusätzlichen Platzbedarf, der auf Kosten der Breite der Lagerbehälter oder auf Kosten des Raumbedarfs geht, zu höherem Gewicht der Anlage und verteuert diese neben den Mehrkosten durch die zweite Kette noch zusätzlich.

Alle bekannten Anordnungen sind jeweils nur zur Durchführung einer einzigen Wärmebehandlung befähigt und für Erwärmen und nachfolgendes Abkühlen sind dann zwei oder mehrere Anordnungen notwendig, die hintereinander angeordnet sind und so eine grosse Einbaulänge ergeben. Es ist nun Aufgabe der Erfindung, ein Verfahren und eine Anordnung zur Durchführung des Verfahrens zu schaffen, das in der Lage ist, auf kleinstem Raum eine abgeschlossene Behandlung in einem einzigen Gehäuse durchzuführen und dabei hohe und tiefe Temperaturen, wie sie bei der Erhitzung und nachfolgender Abkühlung auftreten, zu ertragen. Dabei sollen die Behandlungen mit mehrfachem Medieneinfluss, wie Dampf, Wasser, Stickstoff usw., mit absoluter Betriebssicherheit durchführbar sein.

Erfindungsgemäss wird dies durch ein Verfahren erreicht, das durch die Merkmale im kennzeichnenden Teil des Anspruchs 1 bestimmt ist, nämlich derart, dass die Behandlung in wenigstens zwei übereinander angeordneten Behandlungsräumen, die voneinander verschieden sind, je zur Durchführung von jeweils einem Prozess erfolgt.

Ferner ist eine Anordnung zur Durchführung des Verfahrens dadurch gekennzeichnet, dass die Behandlungsräume voneinander wärmeisoliert sind und wenn notwendig mit einer Schleusenanordnung im Durchgangsbereich zwischen benachbarten Behandlungsräumen versehen ist dass zur lagestabilen Führung der Lagerbehälter in den horizontalen Teilen des Umlaufes Schienen zur Führung von Rädern oder Gleitern der Lagerbehälter vorhanden sind, und dass zu deren Parallelführung beim Übergang zwischen den Behandlungsräumen die Führungsräder oder Gleiter oder deren Tragbolzen durch eine zweite, auf diesem Abschnitt synchron mit der Antriebskette umlaufenden Führungskette, mit entsprechenden Führungstaschen oder Bolzen zum Eingriff in die Führungsräder bezw. mit den Führungsbolzen, geführt sind.

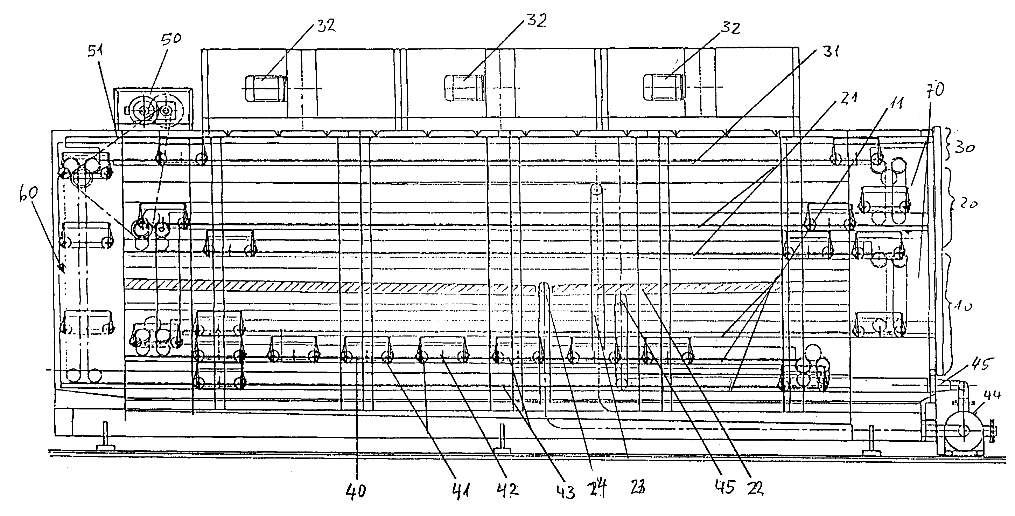

Nachfolgend wird ein Ausführungsbeispiel der Erfindung an Hand der Zeichnung beschrieben. Die Figur zeigt eine vertikale Schnittansicht durch eine Anordnung zur Durchführung der Erfindung.

Die Schnittfigur zeigt eine Anordnung zum Pasteurisieren von Produkten, insbesondere von Nahrungsmitteln in einem Autoklaven 1. Dieser weist drei übereinander angeordnete Behandlungsräume auf, nämlich unten einen ersten Behandlungsraum 10 zur Erwärmung der Produkte, darüber einen zweiten Behandlungsraum 20 zur Abkühlung der Produkte und zuoberst einen dritten Behandlungsraum 30 zum Abblasen und Trocknen. Rechts unten am Autoklaven 1 befinden sich zwei Pumpen 44 mit der über ein Rohr 45 heisses Wasser oder Dampf in den Behandlungsraum 10 eingebracht wird. Ein zweites Rohr 23 ist in den zweiten Behandlungsraum 20 geführt, um kaltes Wasser in denselben zu bringen, und die Produkte abzukühlen. Am Boden 22 dieses zweiten Behandlungsraumes 20 befindet sich ein Ablauf 24 für das Wasser von wo dieses dann über einen Wärmetauscher in bekannter Art rückgekühlt wird. Oben über dem Autoklaven 1 befinden sich mehrere Ventilatoren 32 von denen drei eingezeichnet sind, und die dazu dienen, die von der Behandlung im Behandlungsraum 20 herkommenden Produkte mittels Luft anzublasen und zu trocknen.

In jedem dieser Behandlungsräume 10, 20, 30 sind Schienen 11,21,31 zu erkennen, auf denen Führungsrollen 41, die seitlich der zur Aufnahme von Produkten vorhandenen Lagerbehältern 40 angebracht sind, laufen. Diese sind freilaufend gelagert. Die Lagerbehälter 40 sind mittig mit Bolzen 42 versehen, die in Hülsen einer Antriebskette 43 eingreifen und durch diese vorwärts bewegt werden. Solche Antriebsketten 43 sind beidseits der Lagerbehälter 40 angeordnet.

Links oben am Autoklaven 1 befindet sich der Hauptantrieb 50 für die Antriebskette 43, durch die die Bewegung der Lagerbehälter 40 bewerkstelligt wird. Durch die mit unterbrochenen Strichen gezeichnete Hilfskette 51 wird die Antriebskette 43 vom Hauptantrieb 50 aus angetrieben und zwar wird synchron dazu noch eine weitere Hilfskette 52 angetrieben, durch die die Lagerbehälter 40 eine vertikale Bewegung ohne Schienen für die Rückführung von der obersten Schiene 31 im Behandlungsraum 30 zur untersten Schiene 11 im Behandlungsraum 10 erfahren. In diesem Bereich 60 werden die Lagerbehälter 40 zuerst entladen und dann wieder mit Frischprodukten beladen. Dieser Vorgang ist hier nicht im einzelnen dargestellt, da solche Anordnungen in der Technik gut bekannt sind. Ein Beispiel dazu ist im US-A 5 409 097 gezeigt. Da aber die Lagerbehälter 40 mit der Kette mittig an jeder Seite verbunden sind, könnte zum Entladen auch eine Kippbewegung der Lagerbehälter bewirkt werden, bevor sie für die Aufnahme weiterer zu behandelnder Produkte wieder in die horizontale Lage gebracht werden.

Neben dieser Rückführung im Bereich 60 sind noch vertikale Hebeanordnungen vorhanden, mit denen die Lagerbehälter von den Schienen einer Ebene auf die Schienen der benachbarten Ebene in demselben Behandlungsraum 10,20 oder 30 bewegt werden und dazu noch solche, durch die in einem weiteren Abschnitt 70 die Lagerbehälter 40 von einem Behandlungsraum 10 oder 20 in den benachbarten Behandlungsraum 20 oder 30 angehoben werden.

In all diesen Hebeanordnungen sind neben der Antriebsketten 43, mit denen die Lagerbehälter 40 beidseits mittig gefasst werden, noch Hilfsräder oder Hilfsketten vorhanden, die synchron mit der Antriebskette laufen und Taschen oder Mitnehmer aufweisen, mit denen je nachdem die vorderen oder die hinteren Räder- oder Rollenpaare der Lagerbehälter 40 aufgenommen und gleichermassen wie deren Verbindungsstelle mit der Antriebskette 43 vertikal angehoben werden.

Selbstverständlich sind beliebige Modifikationen möglich, so könnten nur zwei Behandlungsräume 10,20 vorhanden sein und das Abblasen und Trocknen könnte ohne zusätzlichen Behandlungsraum 30, ausserhalb des Autoklaven vor dem Verladen der Produkte zum Abtransport vorgenommen werden. Auch könnten die Lagerbehälter anders als mittig mit den Antriebsketten verbunden sein, wie beispielsweise an den Achsen des einen Rollenpaares, so dass dann möglicherweise eine Kulisse für das zweite Rollenpaar vorhanden sein müsste.

## Patentansprüche

1. Verfahren zur Behandlung von Produkten zwecks Haltbarmachens, welche Produkte sich auf sich einander folgenden Lagerbehältern (3) befinden und durch diese Lagerbehälter (3) in parallelen Ebenen mit horizontalen Verschiebewegen und vertikalen Hebeanordnungen zwischen benachbarten Ebenen und wenigstens einer Rückführung zwischen unterster und oberster Ebene, oder umgekehrt, lagestabil fortbewegbar sind, **dadurch gekennzeichnet**, dass die Behandlung in wenigstens zwei übereinander angeordneten Behandlungsräumen (10,20,30), in denen jeweils einer, von unterschiedlichen Prozessen durchgeführt wird.

2. Verfahren nach Anspruch 1, **dadurch gekennzeichnet**, dass die Produkte in einem ersten Behandlungsraum (10) einer ersten Wärmebehandlung und in einem zweiten Behandlungsraum (20) einer zweiten Wärmebehandlung unterworfen werden.

3. Verfahren nach Anspruch 1 oder 2, **dadurch gekennzeichnet**, dass die Produkte im ersten Behandlungsraum (10) zuerst erwärmt werden, bevor sie im zweiten Behandlungsraum (20) abgekühlt werden.

4. Verfahren nach einem der Ansprüche 1 bis 3, **dadurch gekennzeichnet**, dass die Produkte nach deren Behandlung in den zwei Behandlungsräumen (10,20) einem dritten, über den beiden andern Behandlungsräumen befindlichen Behandlungsraum (30) zugeführt werden.

5. Verfahren nach Anspruch 4, **dadurch gekennzeichnet**, dass im dritten Behandlungsraum (30) ein Trocknungsprozess durchgeführt wird.

6. Anordnung zur Durchführung des Verfahrens nach einem der Ansprüche 1 bis 5, **dadurch gekennzeichnet**, dass die Behandlungsräume (10, 20,30) voneinander wärmeisoliert sind und, wenn notwendig, mit einer Schleusenanordnung im Durchgangsbereich zwischen benachbarten Behandlungsräumen versehen sind, dass zur lagestabilen Führung der Lagerbehälter (40) im horizontalen Verschiebebereich Schienen (11,21,31) zur Führung von Rädern oder Gleitern (41) vorhanden sind, und dass zu deren Parallelführung beim Durchgang durch die Schleusen die Führungsräder oder Gleiter (41) oder deren Tragbolzen durch eine zweite, auf diesem Abschnitt synchron mit der Antriebskette (51) umlaufenden Führungskette (60), mit entsprechenden Führungstaschen oder Bolzen zum Eingriff in die Führungsräder (41) bezw. mit den Führungsbolzen, geführt sind.

7. Anordnung nach Anspruch 5 oder 6, **dadurch gekennzeichnet**, dass auf einem Teil der Rückführungsstrecke die Lagerbehälter (40) mit entsprechenden, auf die Führungsräder oder -Bolzen einwirkenden Führungskulissen in eine gekippte Stellung gebracht werden, um deren Entleerung zu bewirken, und dass anschliessend die Parallelführung wieder mit den Führungsrädern oder -Bolzen zwischen zwei Führungstaschen bewerkstelligt wird.
